# EUROPEAN PATENT SPECIFICATION

(11) **EP 4 275 877 B1**
(45) Date of publication and mention of the grant of the patent: **07.08.2024**
(21) Application number: 22172312.5
(22) Date of filing: 09.05.2022
(51) Int. Cl.: B29D 99/00, B29D 24/00

(54) **HONEYCOMB WITH IMPROVED CELL WALLS, THEIR PRODUCTION PROCESS AND EQUIPMENT**
WABENSTRUKTUR MIT VERBESSERTEN ZELLWÄNDEN, VERFAHREN ZU IHRER HERSTELLUNG UND VORRICHTUNG
STRUCTURE EN NID D'ABEILLES DOTÉE DE PAROIS CELLULAIRES AMÉLIORÉES, SON PROCÉDÉ DE PRODUCTION ET ÉQUIPEMENT

(43) Date of publication of application: 15.11.2023
(73) Proprietor: EconCore N.V., 3001 Leuven (BE)
(72) Inventor: PFLUG, Jochen, 65207 Wiesbaden (DE)
(74) Representative: Kirkpatrick

(56) References cited:
- EP-B1- 3 131 746
- WO-A1-2021/128407
- CN-U- 214 873 141
- FR-A1- 3 002 878

## Description

The present invention relates to cellular structures such as folded honeycomb structures, aspect of the methods of producing the same and equipment for producing the same. In particular, the present invention concerns an improved folded honeycomb structure, a process and equipment to produce the same.

### Technical Background

Folded honeycombs known from WO97/03816 are produced continuously from a single layer, e.g. a flat body. Hexagonal cells are constructed by folding after the introduction of cuts. The cells are bridged by covering-layer connecting surfaces. Folded honeycombs without cuts can be produced economically from one continuous layer of thermoplastic film by rotational vacuum thermoforming. Such folded honeycombs are described in WO2006/053407 and have connecting surfaces covering every second hexagonal cell.

Honeycomb geometries with deformed cell walls have been proposed to ease the bending of the honeycomb to complex shapes. Wendel US3991245 shows an aspect of the method of making a flexible honeycomb by corrugation. McCarthy WO94/17993A1 shows an aspect of the method of making a flexible honeycomb by expansion. Hull WO88/06970A1 shows a "Formable honeycomb panel" with folds or kinks in the W-cell walls. Furthermore, honeycombs with folds or kinks in all the cell walls have been proposed to increase the compression strength. See for example "Expanded honeycomb with structured cell walls" WO2014/140453A1. With the conventional expansion process, the inclusion of folds in the cell walls has been proposed to be made prior to expansion. A specific shape of the very thin cell walls as a function of the cell wall width is not possible to achieve with the conventional expansion processes.

EP3131746B1 discloses a honeycomb, formed from a plurality of polygonal cells arranged in an array, wherein each polygonal cell has lateral cell walls extending between vertices of each polygonal cell, each polygonal cell being bounded on two sides by covering-layer planes, the lateral cell walls of each polygonal cell forming a polygonal ring, and for each polygonal cell at least one lateral cell wall has a wavy shape, the wavy shape being defined by an offset from a line joining two neighbouring vertices of one polygonal cell.

### Summary of the Invention

Embodiments of the present invention provide cellular structures such as folded honeycomb structures, aspect of the methods of producing the same and equipment for producing the same. In particular, the present invention concerns an improved honeycomb structure, a process and equipment to produce the same.

An object of the invention is to be able to provide a honeycomb such as a folded honeycomb with an improved cell wall geometry, and aspects of the methods and apparatus to produce such honeycombs or folded honeycombs.

An object of the invention is to be able to provide a honeycomb such as a folded honeycomb with a stronger cell wall geometry, and aspects of the methods and apparatus to produce such honeycombs or folded honeycombs.

An advantage with embodiments of the present invention can be a good attachment to covering layers applied to the honeycomb core. In addition, the honeycomb products produced have improved compression resistance allowing for a further reduction of material usage.

Embodiments of the present invention provide a honeycomb which is not made by fanning out or expanding from a stack of sheets e.g. glued together.

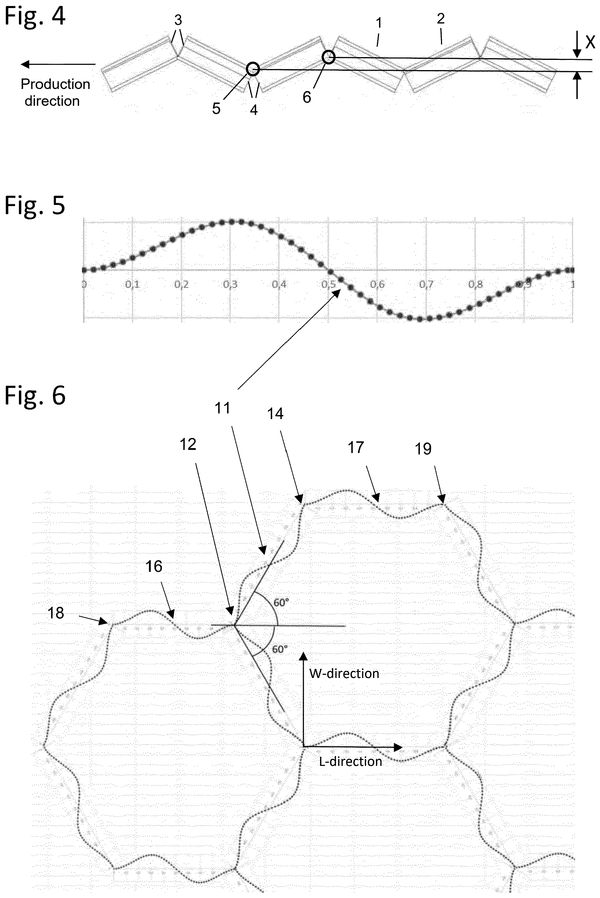

Embodiments of the present invention provide a honeycomb, formed from a plurality of polygonal cells arranged in an array, wherein: each polygonal cell has lateral cell walls extending between vertices of each polygonal cell, each polygonal cell being bounded on two sides by covering-layer planes, the lateral cell walls of each polygonal cell forming a polygonal ring, and for each polygonal cell at least one lateral cell wall has a wavy shape, the wavy shape being defined by an offset from a line joining two neighbouring vertices of one cell, and a slope of the offset of the lateral cell wall with the wavy shape is zero where the lateral cell wall meets a connection to other lateral cell walls. Three lateral cell walls come together at a vertex (see FIG. 6 for example) and ends of each cell wall meet each other with an included angle of 120° or four lateral cell walls meet with an included angle of 90° for a rectangular cell shape. The honeycomb with one or more lateral cell walls with a wavy shape has improved mechanical properties. One, some or all of the lateral cell walls per cell have such a wavy shape. This wavy shape can be included within the honeycomb by methods disclosed in the present application. The wavy shape may be applied to at least one, at least two, at least three or to all lateral cell walls per cell whereby the wavy shape does not have to be the same for all lateral cell walls of an individual cell.

The wavy shape of a lateral cell wall can have four parts: two curved parts in the middle of the wavy shape (i.e. in the middle of the lateral cell wall), the two curved parts being offsets from a line joining two neighbouring vertices of one polygonal cell, these two curved parts having an inflection point between them, and wherein each middle part is connected to a tail or end part which has a low or zero slope. One, some or all of the lateral cell walls per cell have such a wavy shape. This wavy shape can be included within the honeycomb by methods disclosed in the present application. The wavy shape may be applied to at least one, at least two, at least three lateral cell walls or all lateral cells walls per cell whereby the wavy shape does not have to be the same for all lateral cell walls on each cell.

The wavy shape of a lateral cell wall may have two curved parts whereby one of the two curved parts is convex and the other one is concave such that a center of curvature of one curved part is on one side of the lateral cell wall, and a center of curvature of the other part is on the other side of the lateral cell wall.

The wavy shape of a lateral cell wall can have three parts: one curved part in the middle being offset from a line joining two neighbouring vertices of one cell, this middle part being connected to two tails or end parts of the lateral cell wall which have a low or zero slope.

The two tails or end parts have a small or zero slope offset where the lateral cell wall with the wavy shape meets a connection to other lateral cell walls at a vertex where the offset of the lateral cell wall is zero.

The lateral cell walls in an L-direction can have a wavy shape and lateral cell walls in a W-direction have a planar shape, or lateral cell walls in an L-direction can have a wavy shape and lateral cell walls in a W-direction have a wavy shape.

A plurality of 3D-structures can be formed by plastic deformation of a sheet material, wherein the 3D-structures are half cells and are folded together and adjoin or abut one another to form the lateral cell walls of a polygonal cell.

The wavy shape can have an offset with an amplitude, the amplitude being 5% to 20%, or in the range 10% to 15% of a length of a lateral cell wall between neighbouring vertices.

The polygonal cells can have at least two lateral cell walls forming a double wall having a double material thickness and both lateral cell walls of the double wall have a wavy shape.

Embodiments of the present invention provide a method of manufacturing a honeycomb, the method comprising:
forming a plurality of polygonal cells arranged in an array, each polygonal cell having lateral cell walls extending between vertices of each polygonal cell, each polygonal cell being bounded on two sides by a covering-layer, the method comprising forming the lateral cell walls of each polygonal cell as a polygonal ring, and forming for each polygonal cell at least one lateral cell wall having a wavy shape, the wavy shape being defined by an offset from a line joining two neighbouring vertices of one cell and the slope of the offset of the lateral cell wall having a wavy shape is zero where the lateral cell wall having a wavy shape meets a connection to other lateral cell walls.

The wavy shape of a lateral wall can have four parts: two curved parts in the middle of the wavy shape being offsets from a line joining two neighbouring vertices of one polygonal cell, these two middle parts having an inflection point between them and two tails or end parts of the wavy shape which have a low or zero slope, wherein one of the two curved parts is convex and one is concave.

The wavy shape of a lateral cell wall can have three parts: one curved part in the middle of the wavy shape and being offset from a line joining two neighbouring vertices of one polygonal cell, two tails or end parts which have a low or zero slope and to which this middle part is connected to.

Lateral cell walls formed in an L-direction can have a wavy shape and lateral cell walls formed in a W-direction are planar, or lateral cell walls formed in an L-direction can have a wavy shape and lateral cell walls formed in a W-direction can have a wavy shape.

The wavy shape applied to lateral cell walls can have an offset amplitude, the amplitude being 5% to 20%, more precisely in the range 10 to 15%, of a length of a lateral cell wall between the vertices of a polygonal cell.

Lateral cell walls with a wavy shape can have a double material thickness.

The polygonal cells can have at least one double wall, and both lateral cell walls of the at least one double wall have a wavy shape.

Embodiments of the present invention provide equipment for manufacturing a honeycomb from a plastically deformable material, the equipment comprising:
means for forming a plurality of polygonal cells arranged in rows, each polygonal cell having lateral cell walls extending between vertices of each polygonal cell, each polygonal cell being bounded on two sides by covering-layer planes,
means for forming the lateral cell walls of each polygonal cell as a polygonal ring, and means for forming for each polygonal cell at least one lateral cell wall belonging to a polygonal cell with a wavy shape and the at least one lateral cell wall is connected to or is integral with one or two planar lateral cell walls of the polygonal cell to which it belongs or of an adjacent polygonal cell and the slope of the lateral cell wall is zero where the lateral cell wall meets a connection to other lateral cell walls.

An object of the present invention is achieved in accordance with the subject matter of the attached claims and further developed by further features of the subclaims.

### Brief Description of the Drawings

The present invention and its exemplary embodiments will be described with reference to the following schematic drawings:
FIG. 1 shows a section of the plastic deformed material web in accordance with an embodiment of the present invention,
FIG. 2 shows a section of the material web half-folded to form the honeycomb cells in accordance with an embodiment of the present invention,
FIG. 3 shows the almost fully folded material web creating two rows of partially closed honeycomb cells in accordance with an embodiment of the present invention,
FIG. 4 shows a side view of the plastically formed material web section in accordance with an embodiment of the present invention,
FIG. 5 shows the wavy shape of the cell walls in accordance with an embodiment of the present invention.
FIG. 6 shows the hexagonal honeycomb pattern with the wavy cell walls in accordance with an embodiment of the present invention.
FIG. 7 shows variation of the shapes cell wall geometry in accordance with an embodiment of the present invention.
FIG. 8 shows a view of the mould surface with a wavy shape in accordance with any of the embodiments of the present invention.
FIG. 9 shows on the left hand side a top view of a hexagonal honeycomb core in which all cell walls have a wavy shape in accordance with an embodiment of the present invention and, on the right hand side, for comparison a top view of a conventional hexagonal honeycomb.
FIG 10 shows a diagram with the flatwise compression strength versus density of conventional hexagonal honeycombs and hexagonal honeycombs with wavy cell walls in accordance with an embodiment of the present invention.
FIG. 11 shows the shear buckling failure of a hexagonal honeycomb with wavy cell walls loaded in out-of-plane shear in W-direction (WT).
FIG. 12 shows a diagram with the out-of-plane shear performance in W-direction (WT) of conventional hexagonal honeycomb and a hexagonal honeycomb with wavy cell walls in accordance with an embodiment of the present invention.
FIG. 13 shows a hexagonal honeycomb pattern with the wavy cell walls in accordance with an embodiment of the present invention in which the wavy cell walls have no inflection in the middle of the cell wall between two vertices.

The objects are achieved in accordance with the subject matter of the attached claims and further developed by further features of the subclaims.

### Definitions

**"Wavy shape"** refers to the shape of one or more cells walls of a honeycomb core, viewed for example from the top looking down onto fully folded half cells. One or more cell walls of a honeycomb can comprise one or more periods or cycles of a periodic offset or a cyclic offset or half a period or a multiple of half periods per lateral cell wall. Alternatively, the wall shape can be a not-cyclic or not-periodic offset but still provide mechanical properties as good as cyclic or periodic offsets or better. The result of the offset described above is a wavy cell wall shape formed in at least one cell wall of a honeycomb cell, e.g. for each cell. The wavy cell wall has an offset amplitude measured with reference to the straight line/straight plane between adjacent vertices in a cell, i.e. between ends of the cell wall of the wavy form being considered. The end edges of the cell walls are at the edge connections to other cell walls. Preferably, if a periodic or cyclic is used, then there is a half period, a multiple of half periods, a period or a multiple of the period or cyclic offset along the cell walls, between cell wall connections (i.e. the two adjacent vertices) of a polygonal, e.g. 4- or 6-sided, honeycomb cell.

The wavy cell wall shape between vertices of a honeycomb cell according to some embodiments can be described with reference to four parts: two curved parts in the middle being offsets from a plane joining two neighbouring vertices of one cell, after the half-cells have been folded together to make a honeycomb core. These two middle parts have an inflection point between them, further comprising two tails or end parts which have a low or zero slope. One of the curved parts is convex and one concave. The arrangement is anticlastic as centers of curvature are on opposite sides of the lateral cell wall. In other embodiments, the wavy shape of a lateral cell wall has three parts: one curved part in the middle being offset from a line joining two neighbouring vertices of one cell, this middle part being connected to two tails or end parts which join to one or more other lateral cell walls at a vertex. The end parts preferably have a zero slope of the offset where the lateral cell wall with the wavy shape meets a connection to other lateral cell walls at a vertex where the offset of the lateral cell wall is zero. The end parts join to the next cell wall and by doing so they make a vertex and, hence, there is a zero offset at this position. At one vertex or at some vertices or at each vertex of honeycomb cells, the offset of the wavy cell wall and the slope of the wavy cell wall is preferably zero.

### "Slope"

The slope of a wavy cell wall means the slope of the offset of such a wall. The slope is determined in comparison with a plane joining two neighbouring vertices of the polygonal cells. The slope therefore is the rate of change of the offset of the lateral cell wall with respect to distance along the plane joining two neighbouring vertices of the polygonal cells. It is preferred if the slope at a vertex is zero. Slope and especially "zero slope" can be understood by reference to Figures 5 and 6 particularly and the descriptive text for these figures. It is preferred if the offset is also zero at the vertices. For meaning of small or low slope see the discussion below concerning truncated asymptotic cell wall shape.

### "L-direction or W-direction"

For honeycomb cells made from sheet material with one or more cell walls with double layers of sheet material, the L-direction of the honeycomb is the principal direction of double cell walls in such a technical honeycomb, while the single cell walls (when present) have a 30° angle (alternating positive and negative) to the W-direction of the honeycomb and a 60° angle to the L-direction.

### "Vertices at connection edges"

A hexagonal or square tubular cell has a number of cell walls whereby one cell wall joins with another cell wall at a vertex of the hexagonal or rectangular honeycomb cells.

### "Truncated asymptotic cell wall shape"

At each end of a cell wall where one cell wall is connected to another, the shape of the cell wall approaches and preferably reaches a shape of zero slope at the position of zero offset at each vertex. The approach to the cell wall having no slope can be truncated asymptotically which does reach zero slope at a vertex because the asymptotic form of the cell wall is truncated. At one vertex or at some vertices or each vertex of honeycomb cells, the offset of the wavy cell wall and the slope of the wavy cell wall are preferably zero. The truncated asymptotic end region of a lateral cell wall is preferably limited to an end region of the lateral cell wall up to a distance of L/10 from a vertex where L is the distance between two vertices of a polygonal cell or L/7. In the description and claims the slope at the lateral cell wall connection/vertex is described as a slope which is low or small. Low or small in this context means a truncated asymptotic cell wall shape which reaches zero slope over a certain distance at the end of a wavy lateral cell wall.

### Detailed description of the illustrative embodiments

The present invention will be described with reference to certain embodiments and with reference to certain drawings. The drawings are not necessarily to scale but are schematic and are not limiting. The invention is defined more generally in the appended claims. Each dependent claim represents a further embodiment of the present invention.

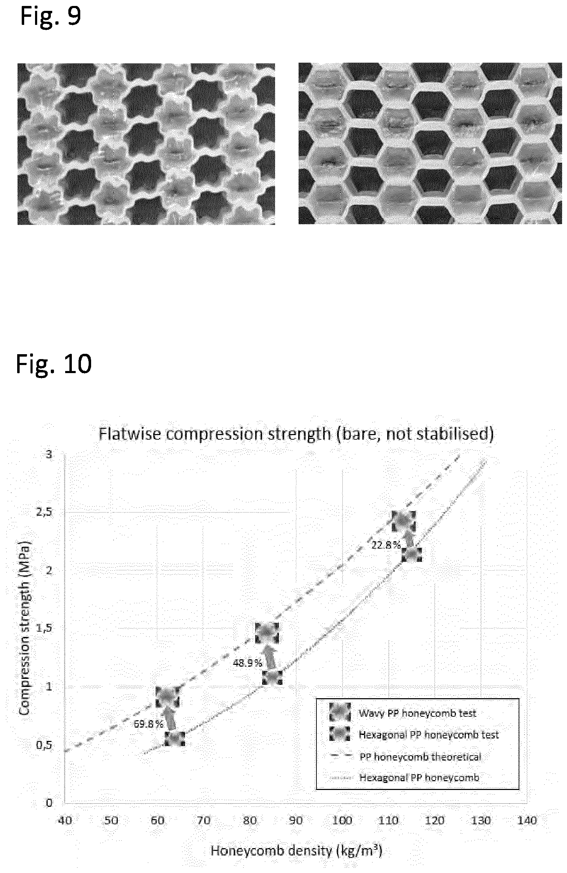

Embodiments of the present invention provide a honeycomb structure such as a folded honeycomb structure, formed from a plurality of tubular/cylindrical polygonal cells arranged in rows with the axes of the tubular/cylindrical polygonal cells being parallel to each other - see FIG. 9. The cells have a polygonal cross-section such as four-(rectangular) or six-sided (hexagonal) cells, optionally square. The honeycomb structure e.g. a honeycomb core, comprises an array of parallel polygonal cells, each polygonal cell having lateral cell walls which, for each cell, adjoin or abut one another in the form of a polygonal ring. The ring can be formed from a plurality of two half-cells which are brought together, e.g. by folding. The rings are formed of cell walls in a polygonal shape; the polygonal shape comprising cell walls which extend between the vertices of the polygonal shape. The tubular/cylindrical cells can be bounded toward at least one opening side and, optionally, toward two opening sides of each polygonal cell by covering-layer planes. The polygonal cells can be each bridged completely or partially in one or other of the covering-layer planes. The honeycomb, such as a folded honeycomb, can be formed from an uncut or substantially uncut flat body, e.g. a continuous sheet. The honeycomb such as a folded honeycomb is preferably made from a plurality of 3D-structures formed by plastic deformation of the sheet. These can have connecting areas e.g. produced by the plastic deformation of the sheet, the connecting areas being located in one or other of the covering-layer planes in the folded honeycomb core. At least one and more preferably two cell walls has/have a wavy shape or each and every one of the cell walls of every cell has/have a wavy shape. The wavy shape refers to the shape of one or more cells walls of a honeycomb core that are offset compared with a straight line between two vertices of the honeycomb cell. The wavy cell wall shape between vertices of a honeycomb cell can be described with reference to four parts: two curved parts in the middle being offsets from a line joining two neighbouring vertices of one cell, these two middle parts having an inflection point between them and two tails or end parts which have a low or zero slope. One of the curved parts is convex and one concave. The end parts may also have a small or zero slope at the position of zero offset. At one vertex or at some vertices or each vertex of honeycomb cells the offset of the wavy cell wall and the slope of the wavy cell wall are preferably zero.

Each cell can be made of cell walls of a single thickness of material, i.e. single sheet material thickness or cells can have a combination of cell walls of a single thickness of sheet material and a cell wall or cell walls having a double thickness of sheet material or having two walls. The cell wall or the cell walls with a wavy shape can be the cell wall or walls which has/have a double sheet material thickness.

It is preferred that at least the cell walls which become, e.g. after the folding step, double cell walls in the L-direction of the honeycomb core, have the wavy shape. Preferably, each cell wall has a wavy structure.

The wavy shape of one or more cell walls of a honeycomb cell is an offset i.e. a deviation in a direction perpendicular to the sheet material making up the cell wall, whereby the deviation can be of at least one, or more than one or all the cell walls. This deviation can be half periodic or periodic e.g. has the shape of corrugations or sinusoidal deviations that repeat themselves. However, non-periodic shapes can be useful and can even be preferred. Whichever type of shape is selected, it should preferably be smooth and continuous and should not have a step or kink. The amplitude of the offset of the wavy cell walls has been found to be optimally e.g. with respect to compression strength, in the range of 5% to 20%, more precisely in the range 10 to 15% of the distance between vertices or between the connections to other cell walls or the length of the cell walls between cell wall connections. This amount of offset amplitude assists in preventing or delaying buckling of these cell walls under out-of-plane compression loads. The cell walls are in the form of a corrugated six-sided (hexagonal) or corrugated four-sided (rectangular) tubular honeycomb cells which are held between one or two covering layers. Even if the wavy cell walls are made somewhat thinner to reach an equal density by compensating for the larger length of the wavy cell wall, the flatwise compression strength can be increased significantly. The slope at the beginning and end of the wavy shape, i.e. at or close to the vertices of the hexagonal or square cells, i.e. at the connections of the cell walls to each other, is preferably small and more precisely zero, so that for six-sided cells such as hexagonal cells, the cell walls with a wavy shape join at the cell wall connections which have an included 120° angle, like in a regular hexagonal honeycomb. For four-sided, optionally rectangular, e.g. square, cells, the cell walls join at the cell wall connections with an included 90° angle, like in a regular rectangular honeycomb. This has been found to be important for the out-of-plane shear performance of the honeycomb core. The cell wall has zero offset at the cell wall connections, i.e. at the vertices of the polygonal form.

The wavy walls can be formed from four different zones. In the middle of a cell wall, the wall shape is curved, the curve defining the offset. In the middle, there are two curved parts one being convex and one being concave, with an inflection point between them. In the end zones, the offset decreases until the wavy wall shape has zero slope and preferably reaches an offset of zero at the same position.

### One process embodiment

A production process of folded thermoplastic honeycombs allows use of a mould which is used to create 3D structures in the thermoplastic sheet with the desired geometrical shape to be able to form the cell walls by folding. Thermoforming, vacuum forming, rotational vacuum forming or other moulding techniques can be used. The input materials for moulding can be sheets of material. The process can include a batch process of forming sheets of material to be processed which are then plastically deformed by a moulding technique. Heat and pressure can be applied in the mould to plastically deform sheet material to form the 3D structures which have the shape of honeycomb half cells with some of them or all of them being wavy cell walls.

The input materials for extrusion can be polymer granulate which can be provided by extrusion of a film directly from an extruder. The 3D structures can then be moulded directly into the extrudate. In another embodiment, the sheet such as a thermoplastic polymer film is pre-heated and then processed to obtain the 3D structures which, when folded together, form the honeycomb cells. The production of the 3D structures can be done by extruding the sheet and then vacuum forming, rotational vacuum forming, thermoforming.

Accordingly, the 3D structures according to embodiments of the present invention can be made from sheet materials or foils or film material having a relatively thin cross-section or small thickness. In terms of wall thickness or cross-section, a structure can be considered thin-walled if the wall thickness is much smaller than the overall dimensions of the structure e.g. a height or a width or a length or a radius, etc. The wall thickness compared to the overall dimensions of the structure can be an order of magnitude thinner or two orders of magnitude or more. This relates to thickness of sheet material and the diameter of a cell. The sheet material can be selected from a group comprising a thermoplastic polymer, a thermoset polymer, a woven, a non-woven such as a spunbonded or spun laid nonwoven, a melt blown nonwoven, a carded nonwoven, an air laid nonwoven, a wet laid nonwoven, a high loft nonwoven comprising fibers having a vertical orientation, such as for example a V-lapped nonwoven, a knitted fabric, a net, a scrim, a two-dimensional mat of extruded entangled filaments, a consolidated layer of unidirectional fibers, and a layer of rubber.

The woven, nonwovens, knitted fabric, net and scrim may comprise natural fibers, such as for example hemp, jute or flax fibers, mineral fibers, such as for example glass, basalt or rockwool fibers, or fibers made of synthetic polymers.

Preferably, the film, woven, nonwovens, knitted fabric, net and scrim are composed of synthetic polymers or mineral fibers, more preferably composed of a thermoplastic polymer and/or a thermoplastic elastomeric polymer.

In a preferred embodiment, the film, woven, nonwovens, knitted fabric, net and scrim are composed of a thermoplastic polymer selected from a group consisting of polyolefins, in particular polyethylene or polypropylene, polyesters, in particular polyethylene terephthalate or recycled polyethylene terephthalate, polytrimethylene terephthalate, polybutylene terephthalate or polyetylene-1,2-furandicaboxylate, polyamides, in particular polyamide 6 or polyamide 6,6, polycarbonates, polyetherketones, polyetheretherketones, polyetherketoneketones, polyethers, polyetheresters, polyphenylene sulfides, polyetherimides, copolymers and mixtures thereof.

Detailed finite element analysis has shown that while it is for the out-of-plane compression resistance preferred that the double cell walls in L-direction or all cell walls are wavy e.g. have a non-periodic or periodic offset such as, but not limited to sinusoidal, square or triangular cross-section, e.g. have parallel ridges and furrows which extend parallel to the longitudinal axis of the honeycomb cells, it is for the out-of-plane shear strength preferable to have a very small or a zero slope at the connections between cell walls. The wavy structure can have a periodic structure and there can be more than one half period or full period in one cell wall but a half period or one period are preferred. Such a wavy structure can be defined by the amplitude or offset of the corrugated wave, the thickness of the sheet and the number of periods in each wavy cell wall. This wavy structure increases the area moment of inertia. The area moment of inertia or second moment of inertia is important in bending and buckling strength of the honeycomb cell wall. The amplitude of the wavy structure of cell walls with reference to a straight wall passing between the ends of the cell wall has been found to be optimal with respect to compression strength, in the range of 5% to 20%, more precisely in the range 10 to 15% of the length of the cell walls between connections to other cell walls (which are the vertices of the polygon form).

Surprisingly, the improved compression resistance of the wavy cell walls leads also to higher out-of-plane honeycomb shear strength if the ends of the wavy cell walls (at the connections to other cell walls) are without a slope, so that the neighboring cell wall at the cell wall connections can perfectly support the cell wall. The wavy cell wall pattern in accordance with embodiments of the present invention, gives an increased mechanical resistance against early buckling even if the cell walls are thinner to compensate for the larger length of the wavy call wall. This greatly improves the weight specific compression strength of the honeycomb.

The edge support of the wavy L-cell walls can be provided by adjacent cell walls e.g. having a smaller offset amplitude. This support is reduced or substantially reduced if the cell walls in the W-direction have a slope at the cell wall connection. The reduced support of the neighboring cell walls when they join with a slope at the cell wall connection would furthermore reduce the out-of-plane shear stiffness and strength of the honeycomb core. For both the wavy L-cell and wavy W-cell walls should have a zero slope at the connection to a neighbouring cell wall and the cell wall may approach the connection point as a truncated asymptote which achieves a zero offset and a zero slope at the connection points.

### One Equipment embodiment

Furthermore, the present invention provides an equipment for producing a folded honeycomb composed of a plastically deformable material, the equipment comprising:
a) means for plastically deforming a web to form first 3D-structures (1 and 2) and second connection areas (3 and 4) therein, the second connection areas being formed between first 3D-structures, at least one wall or at least two walls of the 3D structures has a wavy shape; and
b) means for folding the 3D-structures towards each other to form cells having cell walls which abut or adjoin one another in the form of a ring so that a cell wall of one cell adjoins the cell wall of another cell in a honeycomb structure.

To form the wavy shaped cell walls with a vacuum forming mould, the forming of additional small areas at the fold line between the L-cell walls are required to obtain a straight fold line. A straight fold line is desirable for a stable folding process.

The equipment for producing a folded honeycomb can process a flat body as a web. Alternatively, the web can be processed by equipment for extruding or casting a flat sheet or web and then processed by equipment for moulding, such as vacuum moulding or thermoforming or may comprise means for a non-cutting rotation process or by means of a rotation vacuum thermoforming process to form the 3D-structures. Preferably, the material is directly rotational vacuum thermoformed after being extruded as a thin film in an extrusion process.

The sheet may also be cast or extruded as a corrugated sheet, and the corrugated sheet is moulded to modify the corrugations so that they form the 3D structures. This moulding can be by done with equipment for moulding, such as vacuum moulding or thermoforming or may comprise means for a non-cutting rotation process or by means of a rotation vacuum thermoforming process to form the 3D-structures with at least one cell wall having a wavy shape.

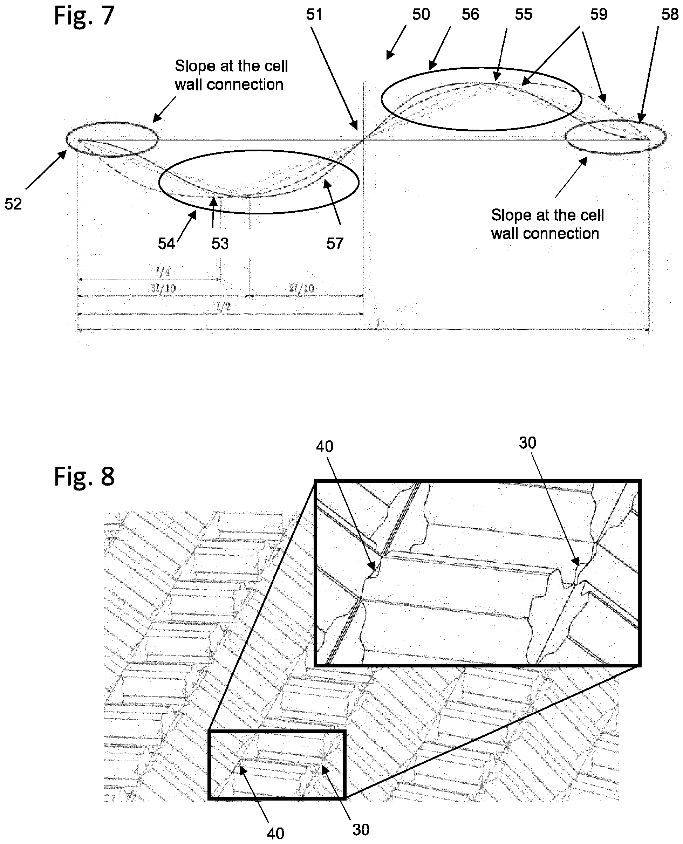

FIG. 8 shows the mould surface which will form the 3D structures in a sheet in accordance with an embodiment of the present invention all cell walls have a wavy shape. The moulds for this purpose have formed in their surfaces a desired geometrical shape of the cell walls including the wavy shape. The matching moulds can comprise upper and lower moulds. The moulds may be in the form of matching rotating moulds or they can be stationary moulds with upper and lower mould surfaces.

Embodiments of the present invention may use thermoforming. This is a process wherein a thermoplastic sheet material is heated to a plastic deforming temperature. The thermoplastic material can be polymeric material.

The hot sheet material is formed to a specific shape in a mould such as the mould in FIG. 8 or in a rotating vacuum forming mould to form at least one or all cell walls of the honeycomb core that has a wavy shape. The result can be trimmed to cut away excess material. The thermoplastic sheet or web material is preferably heated in an oven to a temperature where it is malleable so that it can be stretched into or onto 3D shapes in the mould. If extrusion is used the material will exit the extruder die at a high temperature and it can be cooled until it is at a temperature at which moulding can take place. A cooling step solidifies the half honeycomb structures to their finished shape after which the web is folded. Embodiments of the present invention may use vacuum forming or rotational vacuum forming or may use thermoforming using heat and pressure allowing porous materials to be processed.

In thermoforming, a thermoplastic sheet or web can be fed from a roll or from an extruder and transported through an oven for heating to forming temperature.

In either case, the heated sheet then moves to a matching set of mould halves.

The mould halves are then closed together to deform the thermoplastic sheet material into the detailed shapes in the moulds. After a cooling period the mould tooling opens and sheet material is pulled off the mould.

### Second Equipment embodiment

Further, the present invention provides an equipment for producing a honeycomb such as a folded honeycomb from a flat thermoplastic composite sheet or web material composed of a plastically deformable thermoplastic sheet material. Suitable thermoplastic material can be selected from the polymeric material described above.

The equipment can include:
a) means for transporting a flat or corrugated thermoplastic composite sheet material from a roll or extruding a flat or corrugated sheet from an extruder or taking a flat or corrugated sheet from a stack of sheets,
b) means for plastically deforming the flat thermoplastic sheet material to form or complete first 3D-structures and second connection areas therein, the second connection areas being formed between first 3D-structures, at least one or at least two of the walls of the 3D structures have a wavy shape; and
c) means for folding the 3D-structures towards each other to form cells having cell walls which adjoin one another in the form of a ring so that a cell wall of one cell adjoins the cell wall of another cell in a honeycomb structure.

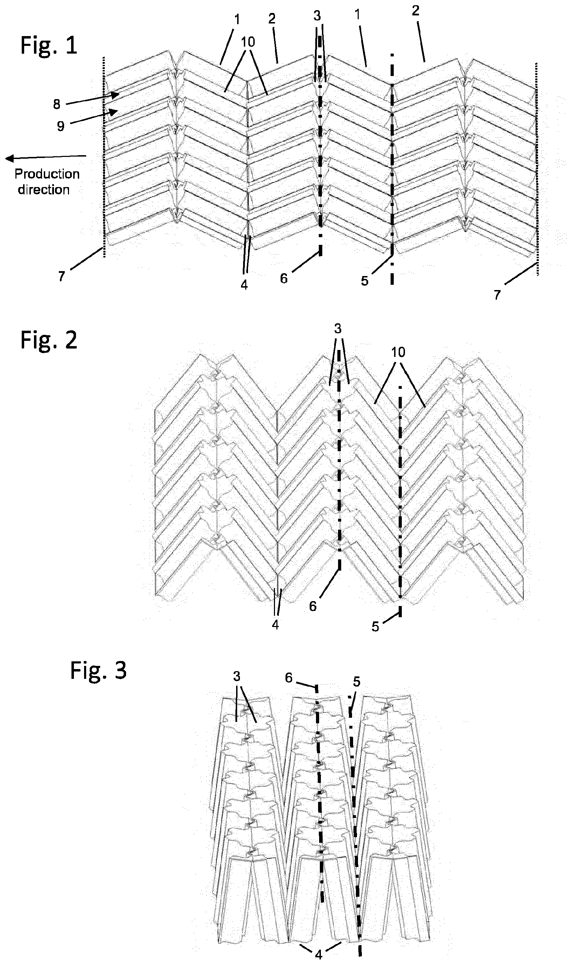

The final honeycomb can have closed ends to the cells. Preferably, only half to the cell are closed at the ends. FIG. 1 shows a section of a flat web e.g. of thin thermoplastic polymer being a plastically deformable material, which has plastic deformations formed in the composite material perpendicular to the material web or sheet. In the regions 1 and 2, the material is formed polygonally, for example trapezoidally, sinusoidally, arcuately or the like, from the plane of the web. Since the fold lines 5 and 6 remain in the plane of the web, the material is stretched and forms the areas 3 and 4, which are substantially perpendicular to the material web. The deformation of the thermoplastic composite web material in the regions 1 and 2 serves the formation of three-dimensional shapes, which form the walls of cell halves in the folded end product. Also, the moulding produces a wall or walls of the plastically deformed material, which will become cell walls in the final honeycomb core and have a wavy shape. These cells walls with a wavy shape will be, for instance, cell walls in the final product which have walls with double material thickness. For example in FIG. 1, walls 10 will abut each other to form a cell wall of the honeycomb with double thickness. As shown in FIG. 1, the 3D structures are elongate. The wave of the walls with a wavy shape, has troughs and ridges which run along the long side of the 3D structure. This will improve compression strength when forces are applied in the thickness direction of the final honeycomb core.

The cells with wavy cell walls are structural and load bearing elements of the folded end product, the walls of which extend transversely to the longitudinal direction of the folded end product. In the folded end product, the cells formed by folding are preferably cylindrical in cross section, the axis of the cylinder extending transversely with respect to the longitudinal direction of the folded end product. The cross-sectional shape of a cell is formed either flat or wavy and can be selected as desired, for example circular or polygonal, in particular even-numbered polygonal, for example hexagonal.

FIG. 2 shows a further intermediate state in the production of the folded honeycomb. The narrowing of the deformed material web occurs by the folding operation of the material web about the folding lines 5 and 6 by means of this folding operation, the surface areas 3 and 4 come to lie flat in the upper and lower surface plane of the honeycomb core. The folding operation can be performed by a compressive force compacting the web in production direction. An expansion deformation of the cell walls transvers to the production direction is avoided by the surface areas 3 and 4. The folding operation could also be carried out, for example, by means of a hot tool which can also preheat the cell walls which meet each other for bonding, e.g. with adhesive or by welding such as ultrasonic welding.

FIGs. 1 and 2 show a section of a flat sheet or web made of a plastically deformable material. The plastically deformable material may be a thermoplastic polymeric material, or a fiber composite material, or similar. In accordance with this embodiment the flat web or sheet has plastic deformations 1, 2 formed therein mainly perpendicular to the material web. In the regions 1 and 2, the material is deformed, e.g. polygonally, for example trapezoidally, or sinusoidally, or arcuately or the like, from the plane of the web. The deformations form ridges 8 and valleys 9 whereby each of these is not continuous. For example, the ridges are composed of a linear series of deformed sections 1, 2 e.g. polygonal, for example trapezoidal, or sinusoidal, or arcuate sections or the like. Preferably, the ridges have a top surface 10 that may be initially (e.g. as formed) parallel to the plane of the web of material. Two surfaces 10 will abut each other when the 3D structures are rotated (also called "folded") to form the honeycomb cells. At least these cell walls with double material thickness will have a wavy shape. The wavy shape is in the form of a corrugated shape of a periodic offset from the plane of the surfaces 10, the corrugated shape having ridges and valleys that extend across the surfaces 10 in a direction perpendicular to the production direction shown in FIG. 1. Preferably the wavy shape has only one period but a half a period or a multiple of a half periods or a multiple of a complete period are included within the scope of the present invention.

The production direction is preferably as shown in FIG. 1. However, a direction perpendicular thereto (parallel to the axes 5 and 6) could be used as well.

The regions 1 and 2 are preferably formed inclined i.e. rotated towards each other around the axis 5 and/or 6, to form additionally u- or v-shaped connection areas 3 and 4. The areas 3 and 4 separate the ridge sections 1, 2, e.g. the polygonal, for example trapezoidal, or sinusoidal, or curved sections or the like in one row of regions 1, 2. One connecting section 3, 4 is placed between two regions 1, 2 and connecting sections 3 alternate along the row of regions 1, 2 with connecting sections 4. The areas 3, 4 form cross-valleys, i.e. perpendicular to the valleys 9. Adjacent cross-valleys are on opposite sides of the web material. The rotation of the regions 1, 2 to bring them into the initial position of FIG. 1, is preferably performed at the same time as the deformations are placed into the web of material. The web material is stretched at the transitions between the areas 1 and 2 to form the areas 3 and 4, which are substantially perpendicular to the outer surfaces 5 of the areas 1 and 2. The angle between surfaces 3, 4 on different ridge sections, allows a part of a tool to enter and, thus, to form these sections. The width direction of the material web elongates preferably in the direction of the axis 5 and 6 while the endless length direction of the material web is continuous along the production direction at the lines 7.

The deformation of the web or sheet material in the regions 1 and 2 serves the purpose of the formation of three-dimensional shapes, which form the walls of cell halves in the folded end product. The cells thus formed are structural and load bearing elements of the folded end product, the walls of which extend transversely to the longitudinal direction of the folded end product. The cell walls with a wavy shape contribute to the improvement in out of plane compressive strength. In the final folded product, the cells formed by folding are preferably cylindrical in cross section, the axis of the cylinder extending transversely with respect to the longitudinal direction of the folded end product and in thickness direction of the planar honeycomb finally produced. The basic cross-sectional shape of a cell can be selected as desired, for example circular or polygonal, in particular even-numbered polygonal, for example hexagonal. This cross section is amended by the formation of at least one or at least two cell walls e.g. those cell walls with a double material thickness. The final cell shape is determined by the shape of the deformed areas 1, 2 in the original web and how they fold together. As shown in FIG 3 when the web is almost fully folded, each cell is formed from two half-cells. The cells are arranged in rows. Each final cell is formed by the bottom and sides of two longitudinally adjacent (in the sheet or web material) valley sections 9. The half cells are joined preferably together across touching surfaces 10 from two longitudinally adjacent (in the web material) ridge sections 8. Accordingly, the present invention provides a folded honeycomb, formed from a plurality of cells arranged in rows, with the following features: the cells have lateral cell walls which adjoin one another in the form of a ring and are bounded toward two opening sides of the cell by covering-layer planes whereby the cells are each bridged or closed completely in one or other of the covering-layer planes. At least one or at least two cell walls have a wavy shape. Cell walls with double material thickness preferably have a wavy shape. The folded honeycomb can be formed from a substantially uncut flat bod, i.e. a continuous sheet that is not porous. The sheet can be extruded and can be extruded with corrugations. Plastic deformation of the sheet or corrugated sheet forms 3D structures. Hence, the folded honeycomb contains a plurality of 3D-structures, e.g. polygonally, sinusoidally or curved shaped regions (1 and 2) formed by plastic deformation and connecting areas (3 and 4) in the covering-layer planes produced by the plastic deformation. At least a part of the cell walls are preferably wholly or partly permanently connected to one another, e.g. by glue or adhesive or welding. Preferably, the parts of the cell walls close to both covering layer planes are welded together. This can be done by heating up the honeycomb core surfaces in a double belt laminator, preferably while welding covering sheets onto the honeycomb core.

The final folded product may include a mixture of cells with different cross-sectional shapes and/or sizes. In particular, at least one cell wall or at least two cell walls have wavy shape.

The final honeycomb structure is a planar product whereby the cells are arranged perpendicular to the plane of the product and across the thickness. Cells on alternating sides of the planar structure are closed by the connection areas 3, 4. All the cells can be closed by the application of one or more covering layers, e.g. by laminating the planar product of the present invention with covering sheets. The present invention includes within its scope the possibility that the 3D structures 1, 2, e.g. trapezoidal, sinusoidal or circular structures in the web which form the cell walls are not fully vertical and/or not contacting each other after the folding of the deformed material web, thus forming a structure which is at least in one direction open in-plane (as shown in FIG. 3).

Returning to the production aspect of the method and FIG. 4, the production aspect of the method continues by rotating the regions 1 and 2 further so that the surfaces 10 from adjacent ridge sections are adjacent to each other or preferably touch. FIG. 4 shows a side view of an intermediate state in the production of the folded honeycomb. The narrowing of the plastically deformed material web occurs by the folding operation of the material web about the folding lines 5 and 6. The u- or v-shaped connection areas 3 and 4 are unfolded and come to lie flat in the plane perpendicular to the cell walls. The areas 3 and 4 are introduced to avoid substantial deformation of the 3D structures of the material web e.g. the polygonally, for example trapezoidally, or sinusoidally, or arcuately deformed sections 1 or 2 or the like.

FIG. 3 shows the material almost fully folded to form two rows of hexagonal honeycomb cells. As a result of being folded together, the adjacent regions 3 (respectively 4) butt against one another. Each honeycomb cell is then closed by an area 3 or 4 on at least one side. That is the cells have on one end a closed surface formed by the areas 3, 4. The surfaces 10 can be connected to one another, e.g. with glue or adhesive or by welding such as ultrasonic welding. Preferable, at least the edges of the surfaces 10 which are connected to the areas 3 and 4 are connected to each other. However, this connection is not an essential requirement of the present invention.

The above process relies on folding the deformed web material whereby the way the 3D-structures 1, 2 and the surfaces 3, 4 are formed is done to ease the folding and rotation process. FIG. 4 shows a side view of the formed material web prior to a folding operation. To ease the folding operation the plastically deformed material web has the axis 5 and 6 (around which the material regions 1 and 2 rotate during folding) preferably positioned out-of- plane with a positive value "x". The dimension x is selected so that the cross-valley on the upper surface of the material has its lowest apex joining point on the axis 6 of the valley higher than the apex joining point on the axis 5 of a cross-valley which is on the lower surface of the web. A longitudinal force along the production direction will act through the axes 5 and 6 and by so doing will exert a bending moment about the axes 5, 6. This allows that the formed material web can be folded up by simple compression in the production direction.

The production can be run discontinuously, e.g. with static moulds or can be automated and run continuously. Preferably, pairs of rollers are used to push the material web or sheet together in production direction. However, rotating tools, oscillating translating tools or guiding profiles can be used to help or ensure the folding up of the web or sheet. Accordingly, an independent aspect of the present invention is to form a folded honeycomb by means of non-cutting, continuous, static plastic non-rotational or plastic rotation forming of a material web. The plastic deformation can be carried out, for example, by means of a rotation vacuum thermoforming or rotation thermoforming without vacuum or static moulding process. The sheet or web material can be provided as a stack of films or from a roll or via a film from the die of an extruder. The moulds have inter-engaging profiles e.g. on each of two mould surfaces or on rolls running against each other.

The surface of the mould or roller, e.g. vacuum roller for the thermoforming of the material sheet or web has a relative complex geometry to enable that in the formed material web the areas 1 and 2 are not only formed but also preferably only slightly rotated (e.g. 10 to 30°) towards each other. This allows the formation of the v-shaped areas 3 and 4 and ensures a vacuum thermoformable airtight shape of the material web that can be folded by further rotation (e.g. of about 80° to 60°) of the areas 1 and 2 around the axis 5 and 6.

The folding equipment can contain a pair of feeding rollers, e.g. rubber coated feeding rollers, with grooves within the surfaces are placed upstream of a guiding grid to keep the material web in-plane during folding and a second set of rollers, e.g. rubber coated pushing rollers with similar grooves to apply a counter pressure, which ensures a sufficient in-plane compression force to enable the folding. The compression force between the lower and upper feeding rollers may reduce the inclination and rotation of the areas 1 and 2 towards each other by elastic deformation, but in the section between the feeding rollers and the counter rollers, the material web will move back into is thermoformed shape, preferably, but not necessarily, without the help of tools or guides and continue to be folded up. A gating and/or braking mechanism initially retards or stops the web. It opens at a force that is generated only by the material web in the fully folded stage. It continues to apply a friction force in its open state as the folded web is formed.

The folded honeycomb is preferably directly further processed to a lightweight sandwich panel by lamination or direct extrusion of covering layers onto both sides of the honeycomb core, e.g. with lamination rollers or belts. The equipment provided by the present invention can including a deforming and folding unit as well as a core gluing or welding unit and a lamination unit.

The web sheet material is provided either directly from a suitable forming equipment such as an extruder or from a roll of web material or stack of sheet material. Optionally, the web or sheet of material is maintained at a temperature or heated up to forming temperatures. The 3D structures 1, 2 are formed in the web or sheet material by any suitable process e.g. thermoforming, vacuum forming or hot rolling. Instead of using vacuum forming, moulding comprising opposed shaped pressure plates can be used to exert pressure and heat onto malleable (e.g. hot) thermoplastic sheet to form the half-cells. This allows perforated materials to be used which is not possible if vacuum forming is applied. The perforations can be produced at the same time as applying the pressure or can be made into the sheet before the pressure moulding step. Making the honeycomb core from perforated sheet can be good for noise attenuation or to ensure the venting of the honeycomb cells in space applications.

The web material with the 3D structures formed is folded together to form the honeycomb core. Optionally, a lamination of one or more cover layers or other layers is performed either in-line or off-line. Finally, post-forming operations are performed such as cutting to length or forming the honeycomb material into shapes, e.g. by pressing or fixing the honeycomb material to another, e.g. to a metal part.

The present invention includes folded honeycombs where the connecting areas 3 and 4 are later e.g. during lamination of non-woven covering layers are removed, e.g. by cutting or melting away so that all cells are opened on both sides. A folded honeycomb from a thermoplastic material is very well formable to complex 3D shapes after preheating of the material. The wavy cell walls ease the forming to complex 3D shapes without a preheating of the material.

Dependent on the raw material used for the folded honeycomb core and the covering layers the sandwich panel can be used for example for structural components, impact and crash protection, decorative panels or packaging applications.

Figures 5 to 7 show various versions of the wavy cell walls. These can be used with any of the embodiments described above.

FIG. 5 shows a top view of a periodic shape indicated as 11 in FIG. 6. A single period is shown which is preferred but, for example, for larger honeycomb cores more than one period can be used. Preferably, at least cell walls which become, (e.g. after the folding step,) cell walls having a double material thickness in the L-direction of the honeycomb core have the wavy shape. The wavy shape, e.g. as used for cell walls with a double material thickness has an offset having an amplitude in the range of 5% to 20%, more precisely in the range 10 to 15% of the distance between vertices of the polygonal cells (e.g. hexagonal or rectangular or square, or four or six sided) or the length of the cell walls with double material thickness between vertices. Other cell walls are the single cell walls in the W-direction of the honeycomb core. The wavy shape of these cell walls can have a smaller amplitude but can also have the same amplitude of the wavy shape of the double cell walls. A periodic shape as used in any of the embodiments of the present invention have slope at the beginning and end of the wavy shape i.e. at the edges of the cell walls, which is preferably small and more precisely zero, so that for hexagonal cells, the cell walls join at the cell wall connections with a 120° angle (2 times 60°), like in a regular hexagonal honeycomb. For rectangular or square cells, the cell walls join at the cell wall connections with a 90° angle, like in a regular rectangular honeycomb.

A further example is illustrated in FIG. 6 which shows a top view of cells of a six sided e.g. honeycomb core which can be used with any of the embodiments of the present invention which provide honeycomb cores. FIG. 6 shows a cell geometry with every cell wall 11, 16, 17 having a wavy shape of a single period between vertices (at least 18, 12, 14, 19) of a hexagon. Included in the present invention are a multiple of periods for a lateral cell wall, or multiples of half periods per lateral cell wall. The wavy shape joins at the cell wall connections (at the vertices at least 18, 12, 14, 19) without a slope, so that orientation of cell wall at the connection is in the general direction of the cell wall. The cell walls join thus with a 120° angle as shown for the vertex 12 (90° for a rectangular cell). FIG. 6 shows all the cell walls having a wavy shape. Cells like those in FIG. 6 can include rectangular, e.g. square honeycomb cells. The wavy shape, e.g. as used for cell walls in FIG. 6 can have a single thickness although one or more cell walls with a double material thickness are not excluded. The wavy form has an offset having an amplitude in the range of 5% to 20%, more precisely in the range 10 to 15% of the distance between vertices like at least 18, 12, 14, 19 of the polygonal cells (e.g. hexagonal or rectangular or square, or four or six sided) or the length of the cell walls with double material thickness between vertices. Other cell walls, which are the single cell walls in the W-direction of the honeycomb core. The wavy shape of these cell walls can have a smaller amplitude or the same amplitude of the wavy shape of the double cell walls. A periodic shape as used in any of the embodiments of the present invention, has slope at the beginning and end of the wavy shape i.e. at the sides of the cell walls, which is preferably small and more precisely zero, so that for hexagonal cells, the cell walls join at the cell wall connections with a 120° angle, like in a regular hexagonal honeycomb. For rectangular or square cells, the cell walls join at the cell wall connections with a 90° angle, like in a regular rectangular honeycomb.

FIG. 7 shows a single period of a wavy shape 50 which illustrates in a schematic way, different options for the shape of wavy cell walls. The cell wall shape 50 includes four parts of a cell wall which are all made from a sheet material integrally together as the cell wall. Parts 54 and 56 are convex/concave curved regions (convex in opposing directions) of the cell wall which are joined together, e.g. integral with each other and which pass through an inflection point 51 between them at the zero-offset point. Alternatively, parts 54 and 56 can form a single convex/concave curved region with no inflection. These curved regions 54, 56 can be identical to a corresponding sinusoidal shape or a pseudo-sinusoidal shape. The curved region 56 includes the position 55 which has the greatest offset in the cell wall in one direction, (solid line 57 in Figure 7). The curved region 54 includes the position 53 which has the greatest offset in the direction opposite to the one direction, (solid line 57 in Figure 7). On the edge remote from region 56 there is a tail region 52. This tail region 52 joins with a next cell wall at a connection point or vertex of the honeycomb (not shown) and has a slope that is less than the slope of a corresponding sinusoidal shape at this position or has the shape of a truncated asymptote which reaches a zero slope at the wavy cell wall. The slope may be monotonically not increasing until it reaches zero slope.

On the edge remote from the part 54 there is a tail region 58. This tail region 58 joins with a next cell wall at a connection point or vertex of the honeycomb core (not shown) and has a slope that is less than the slope of the corresponding sinusoidal shape at this point or has the shape of a truncated asymptote which reaches a zero slope or the wavy cell wall of the tail region 52 is at a slope of zero or the wavy cell wall is monotonically not increasing until it reaches zero slope.

The small slope or preferable zero slope of the wavy shape at the cell wall connections (full line 57 in Figure 7) is shown in contrast to a wavy shape with a significant slope, or even the maximal slope at the cell wall connections (dashed line 59 in Figure 7). Two wavy shapes associated with two materials may differ slightly.

FIG. 8 shows a mould surface for the vacuum forming of a web with wavy cell walls. Other moulding aspect of the methods can be used such as using pressure and heat of a mould with a top and bottom platens. The forming of the wavy L-cell walls results at the fold lines to the formation of small additional skins connection areas 30 and 40. This allows an easy and reliable folding operation at the straight fold lines. The small additional skins connection areas 30 and 40 can improve the core-skin connection at the L-cell walls.

FIG. 9 shows on the left side of the page a top view of a folded honeycomb with wavy cell walls and, on the right side, a top view of a conventional hexagonal honeycomb with straight cell walls.

FIG. 10 shows the flatwise compression strength as function of the honeycomb cell wall density. The compression test results on honeycombs with wavy cell walls are in the density range of 60-70 kg/m³ about 70% improved. In the density range between 80-90 kg/m³, the compression strength is about 49% higher and in the density range of 110-120 kg/m³, the compression strength is about 23% better compared to the compression strength of conventional hexagonal honeycombs with straight cell walls. At equal compression strength, the wavy cell wall geometry allows at lower densities a reduction of the density by about 20 kg/m³. This enables a substantial saving of raw material costs and resources. For the performance of a sandwich core material the out-of-plane shear stiffness and strength is besides the out-of-plane compression stiffness and strength of key importance.

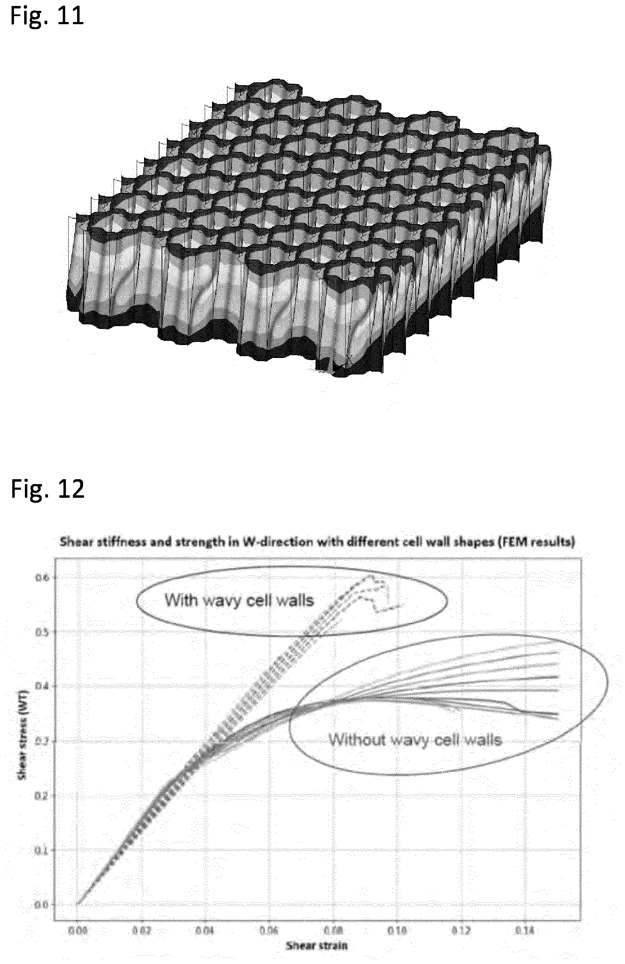

FIG. 11 shows the shear buckling failure mode of a in W-direction out-of-plane shear loaded honeycomb core with wavy cell walls. The out-of-plane shear strength in W-direction is in technical honeycomb cores due to the double L-cell walls typically significantly lower than in L-direction.

FIG. 12 shows the comparison of the stress-strain curves of in W-direction out-of-plane shear loaded honeycomb cores of the same density with wavy cell walls and without wavy cell walls obtained from FEM analysis. The shear stiffness of the honeycombs with wavy cell walls is almost equal to the shear stiffness of the conventional honeycombs with straight cell walls, but in shear strength the honeycombs with wavy cell walls are significantly better performing. Without being limited by theory the higher shear strength is thought to be caused by the later initiation of the shear buckling of the wavy W-cell walls. This effect was also found in the L-direction, but with a smaller increase of the already much better shear strength in this direction. Together this results in more balanced shear properties in the two main directions of the honeycomb core. If desired, a further balance up to equal shear properties in both directions can be achieved with reduction of the length of the L-cell walls in comparison to the length of the W-cell walls.

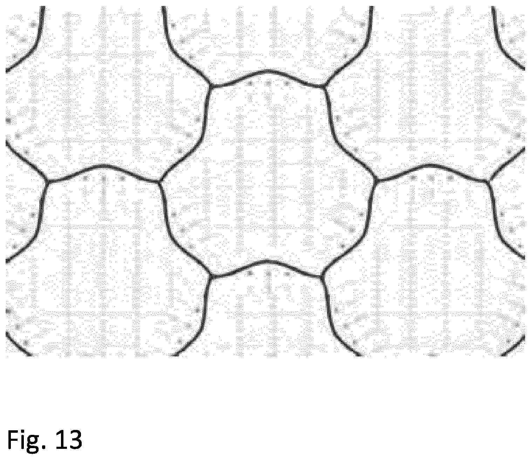

Figure 13 shows a further embodiment of the present invention which can be made by any of the equipment of the present invention and can be made from any disclosed material and used in any of the product embodiments of the present invention. Unlike the wavy cell walls of FIG. 6, a cell wall in FIG. 13 does not have an inflection point in the middle of the cell wall. Instead there is one main curved shape to the lateral cell wall. A concave or convex surface for a lateral cell wall points to the center of the cells depending on which lateral cell wall is involved. FIG. 13 illustrates hexagonal cells with all of the lateral cell walls having a wavy shape. The wavy shapes of lateral cell walls as shown in FIG. 13 are maintained if the cell is rotated through 120° but not if it is rotated through 60°. In the case of a rectangular e.g. square honeycomb cell type this angle is 180°. Wavy cell walls as in FIG. 13 can be translated to the opposite side of the honeycomb cell while maintaining the same shape. The wavy shape of FIG. 13 can be a periodic shape whereby in FIG. 13 there is one half a period per lateral cell wall, i.e. a center of curvature on one side of a lateral cell wall. Also included within the scope of the invention is 1.5, 2.5, etc., periods per lateral cell wall.

In comparison, FIG. 6 illustrates a wavy curved shape applied to the lateral cell walls, the wavy shape having for each lateral cell wall a concave and a convex shape thus illustrating centers of curvature on different sides of the lateral cell walls with an inflection point in the wavy shape. The wavy shape of one lateral cell wall is maintained if the lateral cell wall is rotated through 60°. In the case of a rectangular, e.g. square, honeycomb cell type this angle is 900°. Wavy cell walls can be translated to the opposite side of the honeycomb cell while maintain the same shape. The wavy shape of FIG. 6 can be a periodic shape whereby in FIG. 16 there is one period per lateral cell wall. Also included within the scope of the invention are 2, 3, etc. periods per lateral cell wall.

With respect to FIGs 6 and 13, all lateral cell walls are shown with a wavy shape. Also included within the present invention is at least one, at least two, at least three or all lateral cell walls of a cell having a wavy shape. The wavy shape can be different for different lateral cells walls of a cell. This can be achieved by use of the moulding techniques disclosed in embodiments of the present invention.

## Claims

1. A honeycomb, formed from a plurality of polygonal cells arranged in an array, wherein: each polygonal cell has lateral cell walls (11, 16, 17) extending between vertices (18, 12, 14, 19) of each polygonal cell, each polygonal cell being bounded on two sides by covering-layer planes, the lateral cell walls of each polygonal cell forming a polygonal ring, and for each polygonal cell at least one lateral cell wall has a wavy shape (50), the wavy shape being defined by an offset from a straight line joining two neighbouring vertices of one polygonal cell, **characterized in that** a slope of the offset of the lateral cell wall with the wavy shape is zero where the lateral cell wall meets a connection to other lateral cell walls.

2. The honeycomb according to claim 1, wherein the wavy shape of a lateral cell wall has four parts: two curved parts in the middle of the wavy shape, the two curved parts being offsets from the straight line joining two neighbouring vertices of one polygonal cell, said two curved parts having an inflection point between them, and wherein each curved part in the middle is connected to a tail or end part which has a low or zero slope.

3. The honeycomb according to claim 2, wherein one of the two curved parts in the middle of the wavy shape is convex and the other of the two curved parts is concave such that a center of curvature of one curved part is on one side of the lateral cell wall and a center of curvature of the other curved part is on the other side of the lateral cell wall.

4. The honeycomb according to claim 1, wherein the wavy shape of a lateral cell wall has three parts: one curved part in the middle being offset from the straight line joining two neighbouring vertices of one polygonal cell, said middle part being connected to two tails or end parts which have a low or zero slope.

5. The honeycomb according to any of the claims 2 to 4, wherein the two tails or end parts have a low or zero slope where the lateral cell wall having a wavy shape meets a connection to other lateral cell walls at a vertex of the polygonal cell where the offset of the lateral cell wall from the straight line is zero.

6. The honeycomb according to any of the previous claims, wherein lateral cell walls in an L-direction have a wavy shape and lateral cell walls in a W-direction have a planar shape; or
wherein lateral cell walls in an L-direction have a wavy shape and lateral cell walls in W-direction have a wavy shape.

7. The honeycomb according to any of the previous claims, having a plurality of 3D-structures formed by plastic deformation of a sheet material, wherein the 3D-structures are half cells and are folded together and adjoin or abut one another to form the lateral cell walls of the polygonal cell.

8. The honeycomb according to any of the previous claims, wherein the wavy shape has an offset with an amplitude, the amplitude being 5% to 20% or in the range 10 to 15% of a length of the straight line between neighbouring vertices.

9. The honeycomb according to any of the previous claims, wherein the polygonal cells have at least two lateral cell walls forming a double wall having a double material thickness and both lateral cell walls of the double wall have a wavy shape.

10. A method of manufacturing a honeycomb, the method comprising:
forming a plurality of polygonal cells arranged in an array, each polygonal cell having lateral cell walls (11, 16, 17) extending between vertices (18, 12, 14, 19) of each polygonal cell, each polygonal cell being bounded on two sides by covering-layer planes,
the method comprising:
forming the lateral cell walls of each polygonal cell as a polygonal ring; and
forming for each polygonal cell at least one lateral cell wall having a wavy shape, the wavy shape being defined by an offset from a straight line joining two neighbouring vertices of one polygonal cell and **characterized in that** a slope of the offset of the lateral cell wall having a wavy shape is zero where the lateral cell wall having a wavy shape meets a connection to other lateral cell walls.

11. The method according to claim 10, wherein the wavy shape of a lateral cell wall has four parts: two curved parts formed in the middle of the wavy shape with offsets from a straight line joining two neighbouring vertices of one polygonal cell, the two middle parts having an inflection point between them, and two tails or end parts of the wavy shape which have a low or zero slope, wherein one of the two curved parts is formed convex and one is formed concave, or
wherein the wavy shape of a lateral cell wall has three parts: one curved part formed in the middle of the wavy shape and being offset from the straight line joining two neighbouring vertices of one polygonal cell, said middle part being connected to two tails or end parts which have a low or zero slope.

12. The method according to claim 10 or 11, wherein lateral cell walls formed in an L-direction are made to have a wavy shape and lateral cell walls formed in a W-direction are made planar, or
wherein lateral cell walls formed in an L-direction are made to have a wavy shape and lateral cell walls in a W-direction are formed are made to have a wavy shape.

13. The method of any of the claims 10 to 12, wherein the wavy shape has an offset amplitude, the amplitude being 5% to 20% or in the range 10 to 15% of a length of the straight line between the vertices of a polygonal cell.

14. The method according to any of the claims 10 to 13, wherein lateral cell walls with a wavy shape are formed with a double material thickness.

15. Equipment for manufacturing a honeycomb from a plastically deformable material, the equipment comprising:
means for forming a plurality of polygonal cells arranged in rows, each polygonal cell having lateral cell walls (11, 16, 17) extending between vertices (18, 12, 14, 19) of each polygonal cell, each polygonal cell being bounded on two sides by covering-layer planes;
means for forming the lateral cell walls of each polygonal cell as a polygonal ring; and
means for forming for each polygonal cell at least one lateral cell wall belonging to a polygonal cell with a wavy shape, and the at least one lateral cell wall is connected to or is integral with one or two planar lateral cell walls of the polygonal cell to which the at least one lateral cell wall belongs, or the at least one lateral cell wall is connected to an adjacent polygonal cell and **characterized in that** a slope of the lateral cell wall is zero where the lateral cell wall meets a connection to other lateral cell walls.

## Patentansprüche

1. Wabenstruktur, die aus einer Vielzahl von vieleckigen Zellen gebildet ist, die in einer Anordnung angeordnet sind, wobei: jede vieleckige Zelle seitliche Zellwände (11, 16, 17) aufweist, die sich zwischen Eckpunkten (18, 12, 14, 19) jeder vieleckigen Zelle erstrecken, wobei jede vieleckige Zelle an zwei Seiten durch Decklagenebenen begrenzt ist, wobei die seitlichen Zellwände jeder vieleckigen Zelle einen vieleckigen Ring bilden und wenigstens eine seitliche Wand für jede vieleckige Zelle eine wellige Form (50) aufweist, wobei die wellige Form durch eine Abweichung von einer geraden Linie definiert ist, die zwei benachbarte Eckpunkte einer vieleckigen Zelle verbindet,
**dadurch gekennzeichnet, dass**
eine Steigung der Abweichung der seitlichen Zellwand mit der welligen Form Null ist, wo die seitliche Wand auf eine Verbindung zu anderen seitlichen Zellenwänden trifft.

2. Wabenstruktur gemäß Anspruch 1, wobei die wellige Form einer seitlichen Zellwand vier Teile aufweist: zwei gekrümmte Teile in der Mitte der welligen Form, wobei die zwei gekrümmten Teile Absetzungen von der geraden Linie sind, die zwei benachbarte Eckpunkte einer vieleckigen Zelle verbindet, wobei die genannten zwei gekrümmten Teile einen Wendepunkt zwischen ihnen aufweisen und wobei jeder gekrümmte Teil in der Mitte mit einem Ende oder einem Endteil verbunden ist, der eine geringe oder eine Null Steigung aufweist.

3. Wabenstruktur gemäß Anspruch 2, wobei einer der zwei gekrümmten Teile in der Mitte der welligen Form konvex ist und der andere der zwei gekrümmten Teile derart konkav ist, dass ein Zentrum der Krümmung eines gekrümmten Teils auf einer Seite der seitlichen Zellwand ist und ein Zentrum der Krümmung des anderen gekrümmten Teils auf der anderen Seite der seitlichen Zellwand ist.

4. Wabenstruktur gemäß Anspruch 1, wobei die wellige Form einer seitlichen Zellwand drei Teile aufweist: einen gekrümmten Teil in der Mitte, der von der geraden Linie abweicht, die zwei benachbarte Eckpunkte einer vieleckigen Zelle verbindet, wobei der genannte mittlere Teil mit zwei Enden oder Endteilen verbunden ist, die eine geringe oder eine Null Steigung aufweisen.

5. Wabenstruktur gemäß irgendeinem der Ansprüche 2 bis 4, wobei die zwei Enden oder Endteile eine geringe oder eine Null Steigung aufweisen, wo die seitliche Zellwand, die eine wellige Form aufweist, auf eine Verbindung zu anderen seitlichen Zellwänden an einem Eckpunkt der vieleckigen Zelle trifft, wo die Abweichung der seitlichen Zellwand von der geraden Linie Null ist.

6. Wabenstruktur gemäß irgendeinem der voranstehenden Ansprüche, wobei die seitlichen Zellwände in L-Richtung eine wellige Form aufweisen und die seitlichen Zellwände in einer W-Richtung eine ebene Form aufweisen; oder
wobei die seitlichen Zellwände in einer L-Richtung eine wellige Form aufweisen und die seitlichen Zellwände in der W-Richtung eine wellige Form aufweisen.

7. Wabenstruktur gemäß irgendeinem der voranstehenden Ansprüche, die eine Vielzahl von 3D-Strukturen aufweisen, die durch plastische Verformung eines bahnförmigen Materials gebildet sind, wobei die 3D-Strukturen halbe Zellen sind und zusammengefaltet sind und aneinander angrenzen oder anstoßen, um die seitlichen Zellwände der vieleckigen Zelle zu bilden.

8. Wabenstruktur gemäß irgendeinem der voranstehenden Ansprüche, wobei die wellige Form eine Abweichung mit einer Amplitude aufweist, wobei die Amplitude 5 % bis 20 % beträgt oder im Bereich von 10 % bis 15 % einer Länge der geraden Linie zwischen benachbarten Eckpunkten liegt.

9. Wabenstruktur gemäß irgendeinem der voranstehenden Ansprüche, wobei die vieleckigen Zellen wenigstens zwei seitliche Zellwände aufweisen, die eine doppelte Wand bilden, die eine doppelte Materialdicke aufweisen, und beide seitlichen Zellwände eine wellige Form aufweisen.

10. Verfahren zum Herstellen einer Wabenstruktur, wobei das Verfahren umfasst:
Bilden einer Vielzahl von vieleckigen Zellen, die in einer Anordnung angeordnet werden, wobei jede vieleckige Zelle seitliche Zellwände (11, 16, 17) aufweist, die sich zwischen Eckpunkten (18, 12, 14 19) jeder vieleckigen Zelle erstrecken, wobei jede vieleckige Zelle auf zwei Seiten durch Deckschichtebenen begrenzt werden, wobei das Verfahren umfasst:
Bilden der seitlichen Zellwände jeder vieleckigen Zelle als einen vieleckigen Ring; und
Bilden wenigstens einer seitlichen Zellwand mit einer welligen Form für jede vieleckige Zelle, wobei die wellige Form durch eine Abweichung von einer geraden Linie definiert wird, die zwei benachbarte Eckpunkte einer vieleckigen Zelle verbindet, und
**dadurch gekennzeichnet, dass**
eine Steigung der Abweichung der seitlichen Zellwand, die eine wellige Form aufweist, Null ist, wo die seitliche Zellwand, die eine wellige Form aufweist, auf eine Verbindung zu anderen seitlichen Zellwänden trifft.

11. Verfahren gemäß Anspruch 10, wobei die wellige Form einer seitlichen Zellwand vier Teile aufweist: zwei gekrümmte Teile, die in der Mitte der welligen Form mit Abweichungen von der geraden Linie gebildet werden, die zwei benachbarte Eckpunkte einer vieleckigen Zelle verbindet, wobei die zwei mittleren Teile einen Wendepunkt zwischen ihnen aufweisen, und zwei Enden oder Endteile der welligen Form, die eine geringe oder eine Null Steigung aufweisen, wobei einer der zwei gekrümmten Teile konvex gebildet ist und einer konkav gebildet ist, oder
wobei die wellige Form einer seitlichen Zellwand drei Teile aufweist: einen gekrümmten Teil, der in der Mitte der welligen Form gebildet ist und von der geraden Linie abweicht, die zwei benachbarte Eckpunkte einer vieleckigen Zelle verbindet, wobei der genannte mittlere Teil mit zwei Enden oder Endteilen verbunden ist, die eine geringe oder eine Null Steigung aufweisen.

12. Verfahren gemäß Anspruch 10 oder 11, wobei seitliche Zellwände, die in einer L-Richtung gebildet sind, hergestellt sind, um eine wellige Form aufzuweisen, und seitliche Zellwände, die in einer W-Richtung gebildet sind, eben sind, oder
wobei seitliche Zellwände, die in einer L-Richtung gebildet sind, hergestellt sind, um eine wellige Form aufzuweisen, und seitliche Zellwände in einer W-Richtung gebildet sind, um eine wellige Form aufzuweisen.

13. Verfahren gemäß irgendeinem der Ansprüche 10 bis 12, wobei die wellige Form eine Amplitude aufweist, wobei die Amplitude 5 % bis 20 % beträgt oder im Bereich von 10 bis 15 % einer Länge der geraden Linie zwischen den Eckpunkten einer vieleckigen Zelle liegt.

14. Verfahren gemäß irgendeinem der Ansprüche 10 bis 13, wobei seitliche Zellwände mit einer welligen Form mit einer doppelten Materialdicke gebildet sind.

15. Vorrichtung zum Herstellen einer Wabenstruktur aus einem plastisch verformbaren Material, wobei die Vorrichtung beinhaltet:
Mittel zum Formen einer Vielzahl von vieleckigen Zellen, die in Reihen angeordnet sind, wobei jede vieleckige Zelle seitliche Zellwände (11, 16, 17) aufweist, die sich zwischen Eckpunkten (18, 12, 14, 19) jeder vieleckigen Zelle erstrecken, wobei jede vieleckige Zelle an zwei Seiten durch Deckschichtebenen begrenzt sind;
Mittel zum Bilden der seitlichen Zellwände jeder vieleckigen Zelle als einen vieleckigen Ring; und Mittel zum Bilden wenigstens einer seitlichen Zellwand, die zu einer vieleckigen Zelle mit einer welligen Form gehört, für jede vieleckige Zelle, und die wenigstens eine seitliche Zellwand mit einer oder zwei ebenen seitlichen Zellwand / Zellwänden der vieleckigen Zelle verbunden oder darin integriert ist, zu der die wenigstens eine seitliche Zellwand gehört, oder die wenigstens eine seitliche Zellwand ist mit einer anliegenden vieleckigen Zelle verbunden ist und
**dadurch gekennzeichnet, dass**
eine Steigung der seitlichen Zellwand Null ist, wo die seitliche Zellwand auf eine Verbindung zu anderen seitlichen Zellwänden trifft.

## Revendications

1. Structure en nid d'abeilles, formée à partir d'une pluralité de cellules polygonales agencées en réseau, dans laquelle : chaque cellule polygonale présente des parois cellulaires latérales (11, 16, 17) s'étendant entre des sommets (18, 12, 14, 19) de chaque cellule polygonale, chaque cellule polygonale étant délimitée sur deux côtés par des plans de couches de recouvrement, les parois cellulaires latérales de chaque cellule polygonale formant un anneau polygonal, et pour chaque cellule polygonale au moins une paroi cellulaire latérale présente une forme ondulée (50), la forme ondulée étant définie par un décalage par rapport à une ligne droite reliant deux sommets adjacents d'une cellule polygonale,
**caractérisée en ce qu'**une pente du décalage de la paroi cellulaire latérale avec la forme ondulée est nulle où la paroi cellulaire latérale rejoint une liaison avec d'autres parois cellulaires latérales.

2. Structure en nid d'abeilles selon la revendication 1, dans laquelle la forme ondulée d'une paroi cellulaire latérale présente quatre parties : deux parties courbées au milieu de la forme ondulée, les deux parties courbées étant décalées par rapport à la ligne droite reliant deux sommets adjacents d'une cellule polygonale, lesdites deux parties courbées présentant un point d'inflexion entre elles, et dans laquelle chaque partie courbée au milieu est reliée à une extrémité ou partie d'extrémité qui présente une pente douce ou nulle.

3. Structure en nid d'abeilles selon la revendication 2, dans laquelle une des deux parties courbées au milieu de la forme ondulée est convexe et l'autre des deux parties courbées est concave de telle sorte qu'un centre de courbure d'une partie courbée se trouve d'un côté de la paroi cellulaire latérale et un centre de courbure de l'autre partie courbée se trouve de l'autre côté de la paroi cellulaire latérale.

4. Structure en nid d'abeilles selon la revendication 1, dans laquelle la forme ondulée d'une paroi cellulaire latérale présente trois parties : une partie courbée au milieu qui est décalée par rapport à la ligne droite reliant deux sommets adjacents d'une cellule polygonale, ladite partie centrale étant reliée à deux extrémités ou parties d'extrémité qui présentent une pente douce ou nulle.

5. Structure en nid d'abeilles selon une quelconque des revendications 2 à 4, dans laquelle les deux queues ou parties d'extrémité présentent une pente douce ou nulle où la paroi cellulaire latérale présentant une forme ondulée rejoint une liaison avec d'autres parois cellulaires latérales au niveau d'un sommet de la cellule polygonale où le décalage de la paroi cellulaire latérale par rapport à la ligne droite est nul.

6. Structure en nid d'abeilles selon une quelconque des revendications précédentes, dans laquelle des parois cellulaires latérales dans une direction L présentent une forme ondulée et des parois cellulaires latérales dans une direction W présentent une forme plane ; ou
dans laquelle des parois cellulaires latérales dans une direction L présentent une forme ondulée et des parois cellulaires latérales dans une direction W présentent une forme ondulée.

7. Structure en nid d'abeilles selon une quelconque des revendications précédentes, présentant une pluralité de structures en 3D formées par déformation plastique d'un matériau en feuille, dans laquelle les structures en 3D sont des demi-cellules et sont pliées ensemble et se jouxtent ou viennent en butée les unes contre les autres pour former les parois cellulaires latérales de la cellule polygonale.

8. Structure en nid d'abeilles selon une quelconque des revendications précédentes, dans laquelle la forme ondulée présente un décalage avec une amplitude, l'amplitude étant de 5 % à 20 % ou dans la plage de 10 à 15 % d'une longueur de la ligne droite entre des sommets adjacents.

9. Structure en nid d'abeilles selon une quelconque des revendications précédentes, dans laquelle les cellules polygonales présentent au moins deux parois cellulaires latérales formant une double paroi présentant une double épaisseur de matériau et les deux parois cellulaires latérales de la double paroi présentent une forme ondulée.

10. Procédé pour fabriquer une structure en nid d'abeilles, le procédé comprenant :
former une pluralité de cellules polygonales agencées en réseau, chaque cellule polygonale présentant des parois cellulaires latérales (11, 16, 17) s'étendant entre des sommets (18, 12, 14, 19) de chaque cellule polygonale, chaque cellule polygonale étant délimitée sur deux côtés par des plans de couches de recouvrement, le procédé comprenant :
former les parois cellulaires latérales de chaque cellule polygonale sous la forme d'un anneau polygonal ; et
former pour chaque cellule polygonale au moins une paroi cellulaire latérale présentant une forme ondulée, la forme ondulée étant définie par un décalage par rapport à une ligne droite reliant deux sommets adjacents d'une cellule polygonale et **caractérisé en ce qu'**une pente du décalage de la paroi cellulaire latérale présentant une forme ondulée est nulle où la paroi cellulaire latérale présentant une forme ondulée rejoint une liaison avec d'autres parois cellulaires latérales.

11. Procédé selon la revendication 10, dans lequel la forme ondulée d'une paroi cellulaire latérale présente quatre parties :
deux parties courbées formées au milieu de la forme ondulée avec des décalages par rapport à une ligne droite reliant deux sommets adjacents d'une cellule polygonale, les deux parties du milieu présentant un point d'inflexion entre elles, et deux extrémités ou parties d'extrémité de la forme ondulée qui présentent une pente douce ou nulle, dans lequel une des deux parties courbées est de forme convexe et une est de forme concave, ou
dans lequel la forme ondulée d'une paroi cellulaire latérale présente trois parties : une partie courbée formée au milieu de la forme ondulée et qui est décalée par rapport à une ligne droite reliant deux sommets adjacents d'une cellule polygonale, ladite partie du milieu étant reliée à deux extrémités ou parties d'extrémité qui présentent une pente douce ou nulle.

12. Procédé selon la revendication 10 ou 11, dans lequel des parois cellulaires latérales formées dans une direction L sont faites pour présenter une forme ondulée et des parois cellulaires latérales formées dans une direction W sont faites planes, ou dans lequel des parois cellulaires latérales formées dans une direction L sont faites pour présenter une forme ondulée et des parois cellulaires latérales dans une direction W sont formées et sont faites pour présenter une forme ondulée.

13. Procédé selon une quelconque des revendications 10 à 12, dans lequel la forme ondulée présente une amplitude décalée, l'amplitude étant de 5 % à 20 % ou dans la plage de 10 à 15 % d'une longueur de la ligne droite entre les sommets d'une cellule polygonale.

14. Procédé selon une quelconque des revendications 10 à 13, dans lequel des parois cellulaires latérales avec une forme ondulée sont formées avec une double épaisseur de matériau.

15. Équipement pour fabriquer une structure en nid d'abeilles à partir d'un matériau déformable plastiquement, l'équipement comprenant :
un moyen pour former une pluralité de cellules polygonales agencées en rangées, chaque cellule polygonale présentant des parois cellulaires latérales (11, 16, 17) s'étendant entre des sommets (18, 12, 14, 19) de chaque cellule polygonale, chaque cellule polygonale étant délimitée sur deux côtés par des plans de couches de recouvrement ;
un moyen pour former les parois cellulaires latérales de chaque cellule polygonale sous la forme d'un anneau polygonal ; et
un moyen pour former pour chaque cellule polygonale au moins une paroi cellulaire latérale appartenant à une cellule polygonale ayant une forme ondulée, et l'au moins une paroi cellulaire latérale est reliée à une ou deux parois cellulaires latérales planes de la cellule polygonale à laquelle l'au moins une paroi cellulaire latérale appartient ou est formée d'un seul tenant avec celle-ci ou celles-ci, ou l'au moins une paroi cellulaire latérale est reliée à une cellule polygonal adjacente et
**caractérisé en ce que** la pente de la paroi cellulaire latérale est nulle lorsque la paroi cellulaire latérale rejoint une liaison avec d'autres parois cellulaires latérales.
